# EUROPÄISCHE PATENTANMELDUNG

(11) **EP 3 627 122 A1**
(43) Veröffentlichungstag der Anmeldung: **25.03.2020**
(21) Anmeldenummer: 19197648.9
(22) Anmeldetag: 17.09.2019
(51) Int. Cl.: G01K 17/06, G01D 11/24

(54) **SENSORANORDNUNG**

(30) Priorität: 21.09.2018 DE 102018123326
(71) Anmelder: Dr. Neumann Peltier-Technik GmbH, 82061 Neuried (DE)
(72) Erfinder: WILHELM, Sascha, 86899 Landsberg am Lech (DE); SAMMER, Michael, 80939 München (DE)
(74) Vertreter: Patentship Patentanwaltsgesellschaft mbH

(57) **Zusammenfassung**

Sensoranordnung 200 zur Erfassung einer physikalischen Größe eines Objekts 101, mit einem Gehäuse 303, das eine wärmeleitende Kühlschale 201 zur Kühlung der Sensoranordnung 200 und eine wärmeleitende Platte 301 aufweist, wobei die wärmeleitende Platte 301 mit der wärmeleitenden Kühlschale 201 mechanisch verbunden ist, wobei die wärmeleitende Kühlschale 201 und die wärmeleitende Platte 301 durch eine wärmeisolierende Dichtung 302 getrennt sind, wobei die wärmeleitende Platte 301 an das Objekt 101 anlegbar ist; einer Montageeinrichtung 202, welche ausgebildet ist, das Gehäuse 303 zu halten, wobei die Montageeinrichtung 202 über dem Objekt 101 anbringbar ist und mit dem Gehäuse 303 mittels einer Verbindung verbunden ist; und einem Sensor zur Erfassung der physikalischen Größe.

## Beschreibung

Die Erfindung betrifft eine Sensoranordnung zur Erfassung einer physikalischen Größe eines Objekts.

Physikalische Größen, insbesondere physikalische Messgrößen wie Temperatur, geben Aufschluss über Objekte oder über eine Umgebung von Objekten. Physikalische Größen werden üblicherweise durch Sensoren erfasst.

In bestimmten Umgebungen ist es jedoch schwer, die durch die Sensoren erfassten physikalischen Größen aus den Sensoren auszulesen. Beispielsweise ist es in einer Hochspannungsumgebung oftmals nur mit optischen Systemen möglich, physikalische Messgrößen zu erfassen. Hierfür ist in der Regel Sichtkontakt zum Messobjekt notwendig.

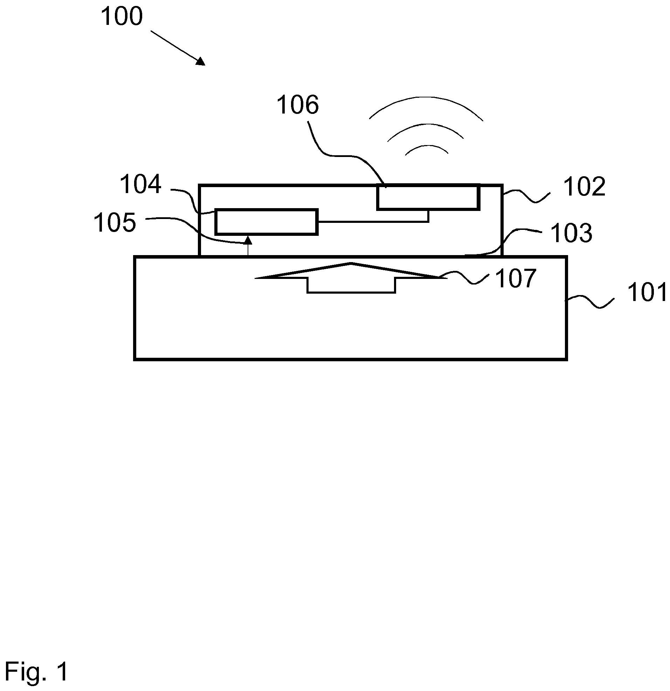

Fig. 1 zeigt in diesem Zusammenhang eine schematische Darstellung einer Anordnung 100. Die Anordnung 100 ist an einem Objekt 101 befestigt. Das Objekt 101 ist beispielsweise ein Schaltkasten oder ein tragendes Bauteil, und die Temperatur an einer Oberfläche des Objekts soll gemessen werden.

Auf dem Objekt 101 ist ein Gehäuse 102 angeordnet. Das Gehäuse 102 liegt mit einer dem Objekt 101 zugewandten Seite 103 an dem Objekt 101 an. Das Gehäuse 102 weist ein Sensorelement 104 auf. Das Sensorelement 104 dient zur Erfassung der physikalischen Größe, insbesondere einer Temperatur des Objekts 101. Die Erfassung der physikalischen Größe ist durch einen Pfeil 105 schematisch dargestellt. Das Sensorelement 104 ist mit einer Antenne 106 verbunden. Die Antenne 106 sendet einen von dem Sensorelement 104 erfassten physikalischen Wert drahtlos aus. Somit kann die physikalische Größe des Objekts 101 dank der drahtlosen Übertragung aus der Ferne erfasst werden.

Die Anordnung 100 muss mit Energie versorgt werden. Die Anordnung 100 kann hierbei mittels des Seebeck-Effekts mit elektrischer Energie versorgt werden. Hierbei wird der thermoelektrische Effekt nutzbar gemacht.

Ein Temperaturgradient in einem Material sorgt für eine Elektronendiffusion, welche wiederum eine elektrische Spannung erzeugt. Durch geeignete Anordnung unterschiedlicher elektrischer Leiter kann diese Spannung genutzt werden, um die Anordnung 100 mit Energie zu versorgen.

Die Temperaturausstrahlung des Objekts 101 ist durch einen dicken Pfeil 107 dargestellt. Ist der Temperaturunterschied der Anordnung 100 auf der dem Objekt 101 zugewandten Seite 103 und der Umgebung, insbesondere der dem Objekt 101 zugewandten Seite 103 gegenüberliegenden Seite der Anordnung 100, klein, kann die Seebeck-Spannung nicht mehr ausreichen, um die Anordnung 100 mit Energie zu versorgen. Hierbei werden möglicherweise noch Messwerte durch das Sensorelement 104 erfasst, jedoch reicht die Energie nicht mehr aus, um über die Antenne 106 die Messwerte auszusenden.

Wird nun das Gehäuse 102 der Anordnung 100 zu stark erwärmt, so wird der Temperaturunterschied auf den gegenüberliegenden Seiten des Gehäuses 102 verringert. Die Verringerung dieses Temperaturunterschieds kann dazu führen, dass die Energie zum bestimmungsgemäßen Betrieb der Sensoranordnung zu sehr sinkt.

Es ist eine Aufgabe der Erfindung, ein verbessertes Konzept für eine Sensoranordnung aufzuzeigen.

Die Aufgabe wird durch die Merkmale des unabhängigen Anspruchs gelöst. Weitere Ausführungsformen sind in den unabhängigen Ansprüchen sowie in den Figuren gezeigt.

Gemäß einem ersten Aspekt wird die Aufgabe durch eine Sensoranordnung zur Erfassung einer physikalischen Größe eines Objekts gelöst. Die Sensoranordnung umfasst ein Gehäuse, das eine wärmeleitende Kühlschale zur Kühlung der Sensoranordnung und eine wärmeleitende Platte aufweist. Die wärmeleitende Platte ist mit der wärmeleitenden Kühlschale mechanisch verbunden. Die wärmeleitende Kühlschale und die wärmeleitende Platte sind durch eine wärmeisolierende Dichtung getrennt. Die wärmeleitende Platte ist an das Objekt anlegbar. Die Sensoranordnung weist eine Montageeinrichtung auf, welche ausgebildet ist, das Gehäuse zu halten, wobei die Montageeinrichtung über dem Objekt anbringbar ist und mit dem Gehäuse mittels einer Verbindung verbunden ist. Die Sensoranordnung weist einen Sensor zur Erfassung der physikalischen Größe auf.

Bei der Sensoranordnung kann es sich um ein kontaktloses Beobachtungssystem handeln. Hierbei wird ein Messwert kontaktlos, d. h. über eine Antenne, an einen Empfänger gesendet. Die Energieversorgung der Sensoranordnung kann über ein thermoelektrisches Element erfolgen. Das Gehäuse kann einem Standard für eine elektromagnetische Verträglichkeit, EMV, genügen und für die Verwendung in einem Hochspannungssektor konzipiert worden sein. Das Gehäuse kann einer IP65-Schutzklasse genügen und staubigen und/oder nassen Umgebungsbedingungen standhalten. Der Sensor kann ein Temperatursensor sein. Die physikalische Größe kann eine Temperatur sein, die von dem Temperatursensor erfasst wird. Die Verbindung kann eine Formschlussverbindung oder eine Kraftschlussverbindung sein.

Die Sensoranordnung kann eine Antenne umfassen, die in vorbestimmten Abständen, insbesondere 120 Sekunden, eine Messung aussendet. Die Messung kann hierbei beispielsweise mittels 868 MHz ausgesendet werden. Ein Aussenden kann auch bei großen Temperaturveränderungen, insbesondere bei Temperaturveränderungen von 2 Kelvin oder höher, stattfinden. Eine Verschlüsselung der ausgesendeten Messdaten kann gemäß einem AES128-Standard erfolgen. Die Antenne kann eine SMD Antenne sein. Ein Energiemanagement und -steuerung kann mit der Sendeelektronik auf einer Platine in dem Gehäuse angeordnet sein.

Die Sensoranordnung kann mittels einer wärmeleitenden Kühlschale gekühlt werden. Die wärmeleitende Kühlschale kann einen Temperaturgradienten hervorrufen, durch den das thermoelektrische Element Energie erzeugen kann.

Der Sensor kann eine physikalische Größe des Objekts erfassen, insbesondere die Temperatur des Objekts. Durch die wärmeleitende Platte kann die physikalische Größe des Objekts an den Sensor zur Erfassung der physikalischen Größen in die Sensoranordnung hineingeleitet werden.

Die wärmeisolierende Dichtung kann die wärmeleitende Platte von der wärmeleitenden Kühlschale thermisch trennen. Hierdurch wird eine thermische Entkopplung der wärmeleitenden Kühlschale von der wärmeleitenden Platte und so von dem Objekt verbessert. Die Kontaktstelle zum Objekt kann mit einer Graphitwärmeleitfolie versehen sein. Hierbei kann auch ein Potenzialausgleich erfolgen.

Die Montageeinrichtung kann das Gehäuse der Sensoranordnung mit dem Objekt formschlüssig oder kraftschlüssig verbinden. Eine Anordnung der Montageeinrichtung über dem Objekt meint hier insbesondere, dass wenigstens ein Teil des Gehäuses zwischen der Montageeinrichtung und dem Objekt angeordnet ist, insbesondere eingeklemmt ist. Somit kann durch Fixieren der Montageeinrichtung an dem Objekt das Gehäuse der Sensoranordnung gegen das Objekt gepresst werden. Somit entsteht eine formschlüssige Verbindung des Objekts mit dem Gehäuse.

Die Montageeinrichtung kann formschlüssig oder kraftschlüssig an dem Gehäuse anliegen. Insbesondere kann die Montageeinrichtung an eine Rundung des Gehäuses angepasst sein. Durch die Montageeinrichtung kann auf eine separate Montagestelle an dem Gehäuse verzichtet werden. Hierdurch kann die wärmeleitende Kühlschale von dem Objekt noch besser thermisch entkoppelt werden. Durch die Montageeinrichtung kann die indirekte Auflagefläche reduziert werden, d.h., die Auflagefläche mit großer Nähe zur Wärmequelle.

In einer Ausgestaltung ist die Montageeinrichtung weniger wärmeleitfähig als die wärmeleitende Kühlschale, insbesondere thermisch isolierend.

Um das Gehäuse gegen von dem Objekt ausgestrahlte thermische Energie zu schützen, kann die Montageeinrichtung weniger wärmeleitfähig sein als die wärmeleitende Kühlschale. Hierdurch wird eine Übertragung der thermischen Energie an die Sensoranordnung, insbesondere an die wärmeleitende Kühlschale, verringert, im Vergleich zu einer Befestigung des Gehäuses ohne die Montageeinrichtung direkt an der Oberfläche des Objekts. Die Montageeinrichtung kann den Wärmeeintrag in die Kühlschale verringern.

In einer Ausgestaltung ist die Verbindung mit einer umlaufenden thermischen Isolationsdichtung versehen, wobei die thermische Isolationsdichtung ausgebildet ist, das Gehäuse von der Montageeinrichtung thermisch zu isolieren.

Die thermische Isolationsdichtung kann die Montageeinrichtung von dem Gehäuse, insbesondere von der wärmeleitenden Kühlschale, thermisch isolieren. Dies kann eine thermische Isolierung verbessern, wenn die Montageeinrichtung weniger wärmeleitfähig ist als die wärmeleitende Kühlschale, und eine zusätzliche thermische Isolierung schaffen, unabhängig von den Wärmeleiteigenschaften der Montageeinrichtung.

In einer Ausgestaltung stellt die wärmeisolierende Dichtung zur Trennung der wärmeleitenden Kühlschale und der wärmeleitenden Platte zugleich eine Dichtung gegenüber Umwelteinfluss dar.

Die wärmeleitende Platte kann ein Deckelelement für das Gehäuse darstellen. Die wärmeleitende Platte kann über eine wärmeisolierende Dichtung mit dem Gehäuse verbunden sein. Dies kann eine Wärmekonvektion von der wärmeleitenden Platte zu der wärmeleitenden Kühlschale hin verringern. Ist diese Dichtung zugleich ein Schutz gegen Umwelteinflüsse, kann auf eine zusätzliche Dichtung gegen solche Umwelteinflüsse, wie beispielsweise Wasser oder Staub, verzichtet werden. Die wärmeisolierende Dichtung kann einer IP65-Schutzklasse genügen. Die wärmeisolierende Dichtung kann aus einem temperaturstabilen witterungsbeständigen Stoff sein und Temperaturen von -40 °C bis +125°C aushalten und UV-beständig sein. Sie kann eine geringe Wasseraufnahme aufweisen, beispielsweise unter 5%, und thermisch isolierend wirken, beispielsweise unter 0,2W/mK.

In einer Ausgestaltung ist in dem Gehäuse ein Thermogenerator zur Erzeugung elektrischer Energie für den Sensor angeordnet, wobei der Thermogenerator die Platte und die Kühlschale thermisch kontaktiert.

Durch die Verwendung eines Thermogenerators, d.h. eines thermoelektrischen Bauelements, kann die Sensoranordnung autark betrieben werden. Die wärmeleitende Kühlschale kann eine Kühlung des Thermogenerators erzeugen und die wärmeleitende Platte eine Erwärmung des Thermogenerators. Der Temperaturunterschied, der hierdurch erzeugt wird, kann den Thermogenerator zur Erzeugung elektrischer Energie bringen. Durch die Montageeinrichtung kann der Temperaturgradient zwischen wärmeleitender Kühlschale und wärmeleitender Platte verbessert werden, da die wärmeleitende Kühlschale nicht so stark von dem Objekt erwärmt wird.

In einer Ausgestaltung weist die Montageeinrichtung Vorsprünge auf, welche vorgesehen sind, die wärmeleitende Platte kippstabil gegen das Objekt anzudrücken.

Die Vorsprünge können von der Montageeinrichtung in Richtung der Seite hervorragen, in die die Montageeinrichtung mit dem Objekt verbindbar ist. Die Vorsprünge können hierbei eine geringere Auflagefläche aufweisen als die Montageeinrichtung ohne Vorsprünge. Hierdurch kann ein Wärmestrom von dem Objekt zu der Montageeinrichtung reduziert werden. Gleichzeitig können die Vorsprünge dafür sorgen, dass die Montageeinrichtung gegen Kippen gesichert ist.

In einer Ausgestaltung weist die Montageeinrichtung Befestigungsdurchbrüche zur Aufnahme von Befestigungselementen, insbesondere Schrauben oder Nieten oder Kabelbindern, für die Befestigung der Montageeinrichtung über dem Objekt auf.

Mit den Befestigungselementen kann die Sensoranordnung über die Montageeinrichtung an dem Objekt festgelegt werden.

Die Vorsprünge können hierbei als Abstandshalter dienen. Die Befestigungsdurchbrüche können eine mechanische Verformung beim Festlegen der Montageeinrichtung an dem Objekt verringern. Dies erhöht die Stabilität und gegebenenfalls auftretende Spannungen beim Befestigen der Montageeinrichtung an dem Objekt.

In einer Ausgestaltung ist die Montageeinrichtung ein umlaufender Montagerahmen.

Ein umlaufender Montagerahmen kann gleichmäßig auf das Gehäuse drücken. Somit kann die Sensoranordnung flächig gleichmäßig auf dem Objekt platziert werden, und unterschiedliche Anpressdrücke werden verhindert. Dies erlaubt eine präzisere Messung, da die wärmeleitende Platte gleichmäßig auf die Oberfläche des Objekts aufpressbar ist.

In einer Ausgestaltung ist die wärmeisolierende Dichtung zur Trennung der wärmeleitenden Kühlschale und der wärmeleitenden Platte aus Kunststoff, insbesondere Silikonschaum gefertigt. Ein Silikonschaum ist temperaturstabil und witterungsbeständig.

In einer Ausgestaltung ist die wärmeleitende Kühlschale aus Metall, insbesondere aus Aluminium geformt.

Metall kann Wärme gut leiten. Hierdurch kann eine Kühlung der Sensoranordnung durch die wärmeleitende Kühlschale erhöht werden.

In einer Ausgestaltung weist die wärmeleitende Kühlschale abgerundete Außenecken und/oder abgerundete Kanten auf, wobei insbesondere alle Außenecken und/oder alle Kanten abgerundet sind.

Abgerundete Außenecken oder abgerundete Kanten können ein Verhalten der Sensoranordnung in einer Hochspannungsumgebung verbessern. Insbesondere werden Stromdurchschläge von einem Hochspannungselement zu der Sensoranordnung hin unwahrscheinlicher.

In einer Ausgestaltung weist das Gehäuse einen oder mehrere Durchbrüche auf.

Ein Durchbruch in dem Gehäuse kann zum Einsetzen einer Kunststoffabdeckung für die Antenne dienen. Hierbei kann die Antenne durch den Durchbruch ein Signal aussenden, das besser empfangen werden kann, als wenn das Signal die wärmeleitende Kühlschale durchdringen müsste.

In einer Ausgestaltung ist die wärmeleitende Platte aus Metall, insbesondere aus Aluminium, oder aus einem wärmeleitenden Kunststoff oder aus einer wärmeleitenden Keramik oder aus Keramik geformt.

Metall kann Wärme gut leiten. Hierdurch kann die Wärme des Objekts leichter zu dem Sensor der Sensoranordnung geleitet werden, als wenn die wärmeleitende Platte aus einem weniger gut wärmeleitenden Material wäre. Metall ist außerdem robust gegenüber Umwelteinflüssen.

In einer Ausgestaltung ist der Sensor in der wärmeleitenden Platte eingebettet.

Die Einbettung des Sensors in die wärmeleitende Platte ermöglicht flächiges Messen der physikalischen Größen, insbesondere der Temperatur. Auch ist der Sensor somit näher an einer Oberfläche des Objekts positioniert, wenn die wärmeleitende Platte gegen das Objekt gedrückt wird. Dies kann eine Messgenauigkeit verbessern.

In einer Ausgestaltung ist der Sensor ein Wärmesensor oder ein Luftfeuchtesensor oder ein Drehzahlsensor oder ein Beschleunigungssensor.

Temperaturen können von einem Wärmesensor erfasst werden. Temperaturen können häufig Beschädigungen von Bauteilen, insbesondere elektronischen Bauteilen, hervorrufen. Eine Drehzahl muss häufig an schwer zugänglichen Stellen gemessen werden. Hierfür kann sich eine solche Sensoranordnung eignen.

Die Anwendungsmöglichkeiten eines Beschleunigungssensors sind vielfältig. Durch eine derartige Sensoranordnung mit einem Beschleunigungssensor kann die Beschleunigung des Objekts auch dann gemessen werden, wenn die Umgebungsbedingungen für eine kabelgebundene Messung widrig sind.

Die Erfindung wird im Folgenden anhand von Ausführungsbeispielen und Figuren näher erläutert. Es zeigen:
- Fig. 1: eine schematische Darstellung einer Anordnung mit einer Sensoranordnung und einem Objekt;
- Fig. 2: eine schematische Darstellung eines Gehäuses und einer Montageeinrichtung gemäß einem Ausführungsbeispiel;
- Fig. 3: eine Explosionsdarstellung einer Sensoranordnung gemäß einem Ausführungsbeispiel;
- Fig. 4: eine weitere Explosionsdarstellung der Sensoranordnung gemäß Fig. 3;
- Fig. 5: eine Schnittdarstellung einer Sensoranordnung gemäß einem Ausführungsbeispiel; und
- Fig. 6: eine weitere Schnittdarstellung einer Sensoranordnung gemäß dem Ausführungsbeispiel von Fig. 5.

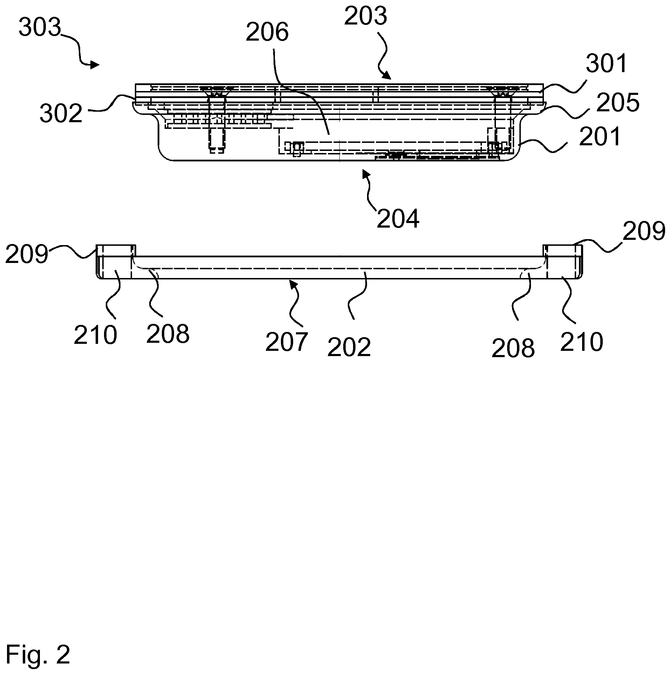

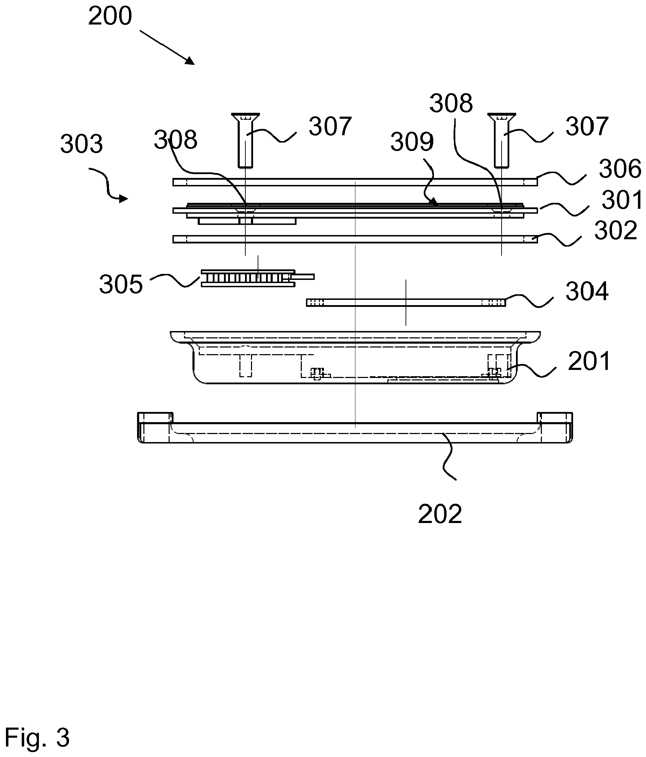

Fig. 2 zeigt ein Gehäuse 303 mit einer wärmeleitenden Kühlschale 201 für eine Sensoranordnung 200, siehe Fig. 3 bis 6, gemäß einem Ausführungsbeispiel und eine Montageeinrichtung 202 gemäß dem Ausführungsbeispiel. Bei der Darstellung handelt es sich um eine schematische Seitenansicht. In dem Gehäuse 303 und der Montageeinrichtung 202 sind jeweils durch die Fronten der Bauelemente verdeckte Konstruktionsteile innerhalb der wärmeleitenden Kühlschale 201 bzw. hinter der Oberfläche liegende Teile der Montageeinrichtung 202 gestrichelt dargestellt.

Das Gehäuse 303, weist eine Kühlseite 204 und eine Auflageseite 203 auf. An der Kühlseite 204 ist die wärmeleitende Kühlschale 201 angeordnet. An der Auflageseite 203 ist eine wärmeleitende Platte 301 angeordnet. Die wärmeleitende Kühlschale 201 ist von der wärmeleitenden Platte 301 durch eine wärmeisolierende Dichtung 302 getrennt. Ist in die wärmeleitende Platte 301 ein Sensor eingesetzt, so kann das Gehäuse 303 mit der Auflageseite 203 an einem Objekt befestigt werden, von dem die physikalische Größe gemessen werden soll.

Die wärmeleitende Kühlschale 201 weist einen umlaufenden Befestigungsrand 205 und einen Grundkörper 206 auf. In dem Grundkörper 206 können Bauelemente, wie ein Sensor oder eine Platine angeordnet werden. In einem weiteren Ausführungsbeispiel ist der Befestigungsrand 205 nicht umlaufend, sondern unterbrochen oder nur an einzelnen Stellen von einem Grundkörper der wärmeleitenden Kühlschale 201 hervorragend.

Die Ecken und Kanten der wärmeleitenden Kühlschale 201 sind abgerundet. Hierdurch kann die Sensoranordnung 200, siehe Fig. 3 bis 6, besser in widrigen Umgebungen eingesetzt werden, insbesondere in Hochspannungsumgebungen neben Bauteilen, die eine Hochspannung führen.

Die Montageeinrichtung 202 weist eine Aussparung 207 für den Grundkörper 206 der wärmeleitenden Kühlschale 201 auf. Die Aussparung 207 ist hierbei so groß, dass der Grundkörper 206 hindurchragen kann. Der Befestigungsrand 205 kann an Befestigungsstellen 208 der Montageeinrichtung 202 aufliegen. Die Befestigungsstellen 208 sind hierbei an eine Form der wärmeleitenden Kühlschale 201 angepasst. Die Befestigungsstellen 208 liegen insbesondere auf dem Befestigungsrand 205 der wärmeleitenden Kühlschale 201 auf. In dem gezeigten Ausführungsbeispiel ist die Montageeinrichtung 202 ein umlaufender Rahmen, der auf dem umlaufenden Befestigungsrand 205 der wärmeleitenden Kühlschale 201 flächig mit den befestigungsstellen 208 aufliegt. Die Befestigungsstellen 208 bilden hierbei den umlaufenden Rahmen.

Die Montageeinrichtung 202 weist Vorsprünge 209 auf. Die Vorsprünge 209 stehen so weit von der Montageeinrichtung 202 ab, dass die Montagehöhe der Auflageseite erreicht wird. Somit ist durch die Montageeinrichtung 202 die Sensoranordnung 200 an ein Objekt flächig andrückbar. Hierbei wird durch die Vorsprünge 209 ein Kippen der Sensoranordnung 200 auf dem Objekt verhindert.

Die Montageeinrichtung 202 weist Befestigungsdurchbrüche 210 auf. Die Befestigungsdurchbrüche 210 sind in die Vorsprünge eingelassen und dienen dazu, die Montageeinrichtung 202 an dem Objekt festzulegen. In einem weiteren Ausführungsbeispiel weist die Montageeinrichtung 202 keine Befestigungsdurchbrüche 210 auf. Hierbei kann die Montageeinrichtung 202 beispielsweise auf das Objekt geklebt werden oder anders dort befestigt sein.

Die Montageeinrichtung 202 ist an die Oberfläche des Gehäuses 303, insbesondere an eine Oberfläche der wärmeleitenden Kühlschale 201 angepasst. D.h. die Montageeinrichtung ist an die abgerundeten Kanten und Ecken der wärmeleitenden Kühlschale 201 angepasst.

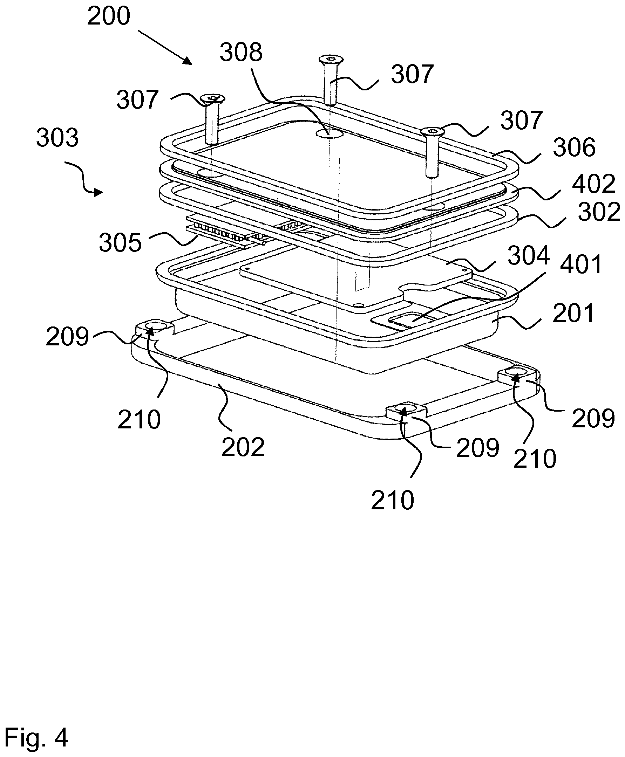

Fig. 3 und Fig. 4 zeigen je eine schematische Explosionsdarstellung einer Sensoranordnung 200 gemäß einem Ausführungsbeispiel. Die Sensoranordnung 200 weist die wärmeleitende Kühlschale 201 und die Montageeinrichtung 202 auf, wie zu Fig. 2 beschrieben.

Eine wärmeleitende Platte 301 weist einen Sensor auf, der im gezeigten Ausführungsbeispiel eine Temperatur messen kann. Der Sensor ist ein Wärmesensor. In weiteren Ausführungsbeispielen ist der Sensor ein anderer Sensor und misst eine andere physikalische Größe, beispielsweise eine Beschleunigung, eine Luftfeuchte oder eine Drehzahl.

Zwischen der wärmeleitenden Platte 301 und der wärmeleitenden Kühlschale 201 ist eine wärmeisolierende Dichtung 302 angeordnet. Die wärmeisolierende Dichtung 302 isoliert die wärmeleitende Kühlschale 201 von der wärmeleitenden Platte 301. Außerdem ist hierüber zusammen mit einer umlaufenden Dichtung 306 ein Umweltschutz gegeben, sobald die Sensoranordnung 200 auf dem Objekt 101 angebracht wird. Die umlaufende Dichtung 306 ist auf einer der wärmeleitenden Kühlschale 201 abgewandten Seite der wärmeleitenden Platte 301 angeordnet.

Zusammen mit der wärmeleitenden Kühlschale 201 bildet die wärmeleitende Platte 301 ein Gehäuse 303. Innerhalb des Gehäuses 303 ist eine Platine 304 und ein thermoelektrisches Bauelement 305, insbesondere ein Thermogenerator, angeordnet. Das thermoelektrische Bauelement 305 erzeugt über eine thermische Differenz elektrische Energie, mit der insbesondere das Energiemanagement und die Sendeeinrichtung auf der Platine 304 und der Sensor in der wärmeleitenden Platte 301 mit Energie versorgt werden.

Die wärmeleitende Platte 301 wird durch Befestigungselemente 307, im gezeigten Ausführungsbeispiel Schrauben, fixiert. Hierfür sind in der wärmeleitenden Platte 301 Aussparungen 308 vorgesehen, so dass die Befestigungselemente 307 nicht über eine in Richtung des zu messenden Objekts weisende Oberfläche 309 der wärmeleitenden Platte 301 hinausragen. Somit kann die Sensoranordnung 200 plan auf dem Objekt aufliegen.

Fig. 4 zeigt eine perspektivische Explosionsdarstellung gemäß dem Ausführungsbeispiel wie zu Fig. 3 beschrieben. In Fig. 4 ist insbesondere ein Durchbruch 401 zu sehen, der in der wärmeleitenden Kühlschale 201 angeordnet ist. Der Durchbruch 401 ist durch ein Kunststoffelement abgedeckt und dient dazu, eine Antenne zu schützen, die in dem Gehäuse vor dem Durchbruch 401 angeordnet ist. Die Antenne ist aus Gründen der Übersichtlichkeit in den Figuren nicht dargestellt. Die wärmeleitende Platte 301 weist einen umlaufenden Bereich 402 auf, auf dem die thermische Isolationsdichtung 306 aufliegt. In einem weiteren Ausführungsbeispiel ist der Durchbruch 401 nicht oder mit einem anderen Material abgedeckt. In einem weiteren Ausführungsbeispiel umfasst die wärmeleitende Kühlschale 201 keinen Durchbruch. Hierbei sendet die Antenne durch die wärmeleitende Kühlschale und/oder ist in diese integriert.

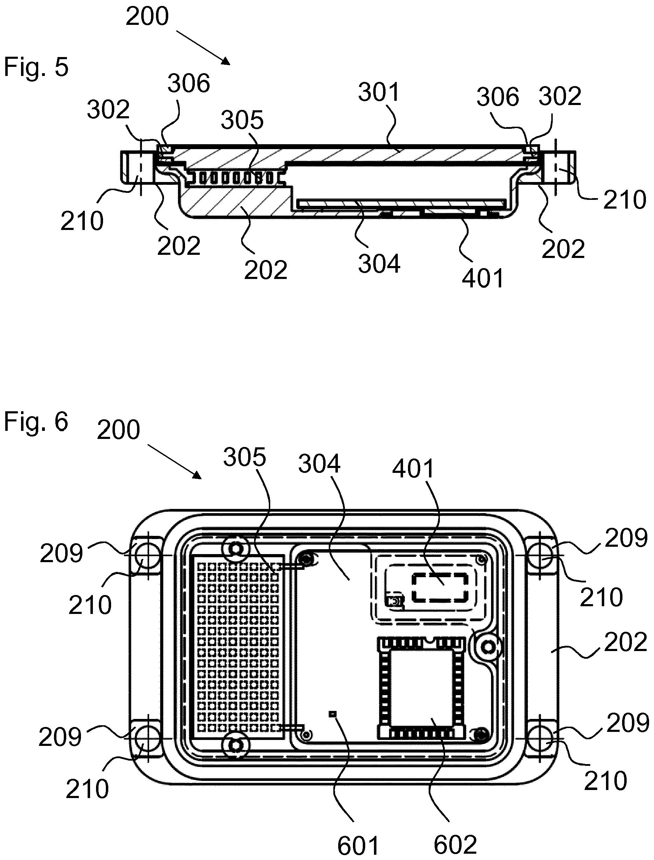

In den Fig. 5 und 6 ist eine schematische Schnittdarstellung der Sensoranordnung 200 gemäß dem beschriebenen Ausführungsbeispiel gezeigt. In den Fig. 5 und 6 ist das Gehäuse 303 zusammengesetzt und in die Montageeinrichtung 202 eingesetzt. Hierbei ist ersichtlich, dass die Montageeinrichtung 202 flächig an dem Gehäuse 303, insbesondere der wärmeleitenden Kühlschale 201 aufliegt. In Fig. 6 ist ein Sensor 601 dargestellt, der in die wärmeleitende Platte 301 integriert ist und eine Energiesteuerung 602, insbesondere ein Mikrocontroller, dargestellt, der das Energiemanagement der Sensoranordnung 200 verwaltet.

Wie zu Fig. 1 beschrieben, wird die Sensoranordnung auf das Objekt aufgesetzt. Hierbei wird die Sensoranordnung 200 durch die Montageeinrichtung 202 auf dem Objekt festgelegt. Hierbei klemmt die Montageeinrichtung 202 den Befestigungsrand der wärmeleitenden Kühlschale 201 gegen eine Oberfläche des Objekts, von dem die physikalische Größe gemessen werden soll.

Die physikalische Größe wird von dem in der wärmeleitenden Platte 301 integrierten Sensor 601 als physikalischer Messwert aufgenommen und von der Antenne unter bestimmten Bedingungen ausgesendet. Insbesondere sendet die Antenne alle 120 Sekunden und/oder wenn die aufeinander folgenden Messwerte 2 Kelvin auseinander liegen oder einen Referenzwert überschreiten.

Die elektrische Energie für die Sensoranordnung 200 wird herbei durch das thermoelektrische Bauelement 305 erzeugt.

Die Montageeinrichtung 202 sorgt dafür, dass die wärmeleitende Kühlschale 201 thermisch von dem Objekt, das Wärme emittieren kann, entkoppelt ist und so kühler ist, als wenn die wärmeleitende Kühlschale 201 thermisch leitend mit dem Objekt verbunden wäre. Der Temperaturgradient zwischen der wärmeleitenden Kühlschale 201 und der wärmeleitenden Platte wird hierdurch größer, was dazu führt, dass die Sensoranordnung durch das thermoelektrische Bauelement 305 bei einer höheren Umgebungstemperatur noch mit elektrischer Energie versorgt werden kann, im Vergleich zu einer Befestigung der Sensoranordnung 200 an dem Objekt ohne die Montageeinrichtung 202.

Durch die Montageeinrichtung 202 macht eine Befestigung, insbesondere eine formschlüssige Befestigung, des Gehäuses 303 an einem Objekt möglich. Hierbei wird die Befestigung von der wärmeleitenden Kühlschale 201 thermisch entkoppelt.

### Bezugszeichenliste

- 100: Anordnung
- 101: Objekt
- 102: Gehäuse
- 103: Seite
- 104: Sensorelement
- 105: Pfeil
- 106: Antenne
- 107: Pfeil
- 200: Sensoranordnung
- 201: wärmeleitende Kühlschale
- 202: Montageeinrichtung
- 203: Auflageseite
- 204: Kühlseite
- 205: Befestigungsrand
- 206: Grundkörper
- 207: Aussparung
- 208: Befestigungsstelle
- 209: Vorsprung
- 210: Befestigungsdurchbruch
- 301: wärmeleitende Platte
- 302: wärmeisolierende Dichtung
- 303: Gehäuse
- 304: Platine
- 305: thermoelektrisches Bauelement
- 306: thermische Isolationsdichtung
- 307: Befestigungselement
- 308: Aussparung
- 309: Oberfläche
- 401: Durchbruch
- 402: umlaufender Bereich

## Patentansprüche

1. Sensoranordnung (200) zur Erfassung einer physikalischen Größe eines Objekts (101), mit:
einem Gehäuse (303), das eine wärmeleitende Kühlschale (201) zur Kühlung der Sensoranordnung (200) und eine wärmeleitende Platte (301) aufweist, wobei die wärmeleitende Platte (301) mit der wärmeleitenden Kühlschale (201) mechanisch verbunden ist, wobei die wärmeleitende Kühlschale (201) und die wärmeleitende Platte (301) durch eine wärmeisolierende Dichtung (302) getrennt sind, wobei die wärmeleitende Platte (301) an das Objekt (101) anlegbar ist;
einer Montageeinrichtung (202), welche ausgebildet ist, das Gehäuse (303) zu halten, wobei die Montageeinrichtung (202) über dem Objekt (101) anbringbar ist und mit dem Gehäuse (303) mittels einer Verbindung verbunden ist; und
einem Sensor zur Erfassung der physikalischen Größe.

2. Sensoranordnung (200) nach Anspruch 1, wobei die Montageeinrichtung (202) weniger wärmeleitfähig als die wärmeleitende Kühlschale (201), insbesondere thermisch isolierend, ist.

3. Sensoranordnung (200) nach einem der vorstehenden Ansprüche, wobei die Verbindung mit einer umlaufenden Dichtung (306) versehen ist, wobei die umlaufende Dichtung (306) ausgebildet ist, eine Aussparung (308) gegenüber Umwelteinfluss abzudichten.

4. Sensoranordnung (200) nach einem der vorstehenden Ansprüche, wobei die wärmeisolierende Dichtung (302) zur Trennung der wärmeleitenden Kühlschale (201) und der wärmeleitenden Platte (301) zugleich eine Dichtung gegenüber Umwelteinfluss darstellt.

5. Sensoranordnung (200) nach einem der vorstehenden Ansprüche, wobei in dem Gehäuse (303) ein Thermogenerator zur Erzeugung elektrischer Energie für den Sensor angeordnet ist, wobei der Thermogenerator die wärmeleitende Platte (301) und die wärmeleitende Kühlschale (201) thermisch kontaktiert.

6. Sensoranordnung (200) nach einem der vorstehenden Ansprüche, wobei die Montageeinrichtung (202) Vorsprünge (209) aufweist, welche vorgesehen sind, die wärmeleitende Platte (301) kippstabil gegen das Objekt (101) anzudrücken.

7. Sensoranordnung (200) nach einem der vorstehenden Ansprüche, wobei die Montageeinrichtung (202) Befestigungsdurchbrüche (210) zur Aufnahme von Befestigungselementen, insbesondere Schrauben oder Nieten oder Kabelbindern, für die Befestigung der Montageeinrichtung (202) über dem Objekt (101) aufweist.

8. Sensoranordnung (200) nach einem der vorstehenden Ansprüche, wobei die Montageeinrichtung (202) ein umlaufender Montagerahmen ist.

9. Sensoranordnung (200) nach einem der vorstehenden Ansprüche, wobei die wärmeisolierende Dichtung (302) zur Trennung der wärmeleitenden Kühlschale (201) und der wärmeleitenden Platte (301) aus Kunststoff, insbesondere Silikonschaum gefertigt ist.

10. Sensoranordnung (200) nach einem der vorstehenden Ansprüche, wobei die wärmeleitende Kühlschale (201) aus Metall, insbesondere aus Aluminium, oder aus einem wärmeleitenden Kunststoff oder aus einer wärmeleitenden Keramik geformt ist.

11. Sensoranordnung (200) nach einem der vorstehenden Ansprüche, wobei die wärmeleitende Kühlschale (201) abgerundete Außenecken und/oder abgerundete Kanten aufweist, wobei insbesondere alle Außenecken und/oder alle Kanten abgerundet sind.

12. Sensoranordnung (200) nach einem der vorstehenden Ansprüche, wobei das Gehäuse (303) einen oder mehrere Durchbrüche (401) aufweist.

13. Sensoranordnung (200) nach einem der vorstehenden Ansprüche, wobei die wärmeleitende Platte (301) aus Metall, insbesondere aus Aluminium, oder aus einem wärmeleitenden Kunststoff oder aus Keramik geformt ist.

14. Sensoranordnung (200) nach einem der vorstehenden Ansprüche, wobei der Sensor in der wärmeleitenden Platte (301) eingebettet ist.

15. Sensoranordnung (200) nach einem der vorstehenden Ansprüche, wobei der Sensor ein Wärmesensor oder Feuchtesensor oder ein Drehzahlsensor oder ein Beschleunigungssensor ist.
